**Europäisches Patentamt**

**European Patent Office**

**Office européen des brevets**

(19)

(11) Numéro de publication: **0 245 183**
**B1**

## (12) FASCICULE DE BREVET EUROPEEN

(45) Date de publication du fascicule du brevet:
**18.07.90**

(51) Int. Cl.⁵: **A22B 5/00**

(21) Numéro de dépôt: **87420113.0**

(22) Date de dépôt: **27.04.87**

(54) **Procédé et machine pour arracher les pannes d'un porc abattu.**

(30) Priorité: **28.04.86 FR 8606360**

(43) Date de publication de la demande:
**11.11.87 Bulletin 87/46**

(45) Mention de la délivrance du brevet:
**18.07.90 Bulletin 90/29**

(84) Etats contractants désignés:
**AT BE CH DE ES GB IT LI LU NL SE**

(56) Documents cités:
**FR-A- 2 428 979**
**US-A- 3 157 213**

(73) Titulaire: **SOCIETE DES ATELIERS DE**
**CONSTRUCTIONS MECANIQUES LUCIEN DURAND,**
**Société Anonyme:, Quartier des Buis Baix,**
**F-07120 Chomerac(FR)**

(72) Inventeur: **Durand, Lucien, Avenue de la Gare,**
**F-07210 Baix(FR)**

(74) Mandataire: **Ropital-Bonvarlet, Claude, Cabinet BEAU**
**DE LOMENIE, 51, avenue Jean-Jaurès, F-69007 Lyon(FR)**

## Description

La présente invention concerne le domaine de l'abattage industriel des porcs et elle vise, plus particulièrement, l'exécution d'opérations de préparation suivant cet abattage.

L'objet de l'invention concerne, plus spécialement encore, la phase de préparation au cours de laquelle, après abattage et éviscération, on procède à l'arrachement ou au décollement de deux amas graisseux tapissant les faces internes des flancs du porc, amas graisseux qui sont, habituellement, dénommés "pannes".

Les pannes peuvent être considérées comme des sous-produits n'entrant pas directement dans la consommation alimentaire. De façon générale, de tels sous-produits connaissent une utilisation dans le domaine industriel et, en particulier, en cosmétologie.

Les pannes présentent cette caractéristique particulière que leur conservation dépend, essentiellement, du procédé et de la phase de détachement par rapport au porc abattu. Il a été constaté qu'il fallait, impérativement, détacher ces pannes, au moins partiellement, après éviscération et avant réfrigération, de façon à pouvoir ensuite sectionner leur attache par rapport aux flancs et obtenir, de cette façon, une couche graisseuse présentant les meilleures conditions de conservation.

Dans un procédé d'abattage industriel, l'arrachement doit donc intervenir lorsque le porc est suspendu par les pattes arrière, après la phase d'éviscération, avant la fente du porc, de préférence.

Jusqu'à présent, cet arrachement des pannes est effectué de façon manuelle à poste fixe ou mobile si le porc est entraîné en défilement continu. L'opérateur est astreint à introduire les deux mains à l'intérieur de la carcasse du porc ouvert et suspendu, de façon à saisir, par le bout des doigts, la base inférieure d'un amas graisseux pour en assurer, tout d'abord, l'arrachement par rapport à la face interne du flanc concerné. Une seconde phase de l'opération consiste alors à exercer une traction vers le haut, particulièrement puissante, soutenue et continue, de façon à décoller la panne jusqu'à la partie supérieure, c'est-à-dire l'attache avec la face interne du bassin.

L'opérateur doit, bien entendu, procéder de même façon pour ce qui concerne la deuxième panne d'un même porc.

L'arrachement-décollement des deux pannes d'un porc représente un travail particulièrement pénible, étant donné que la préhension de chaque panne avec les extrémités des doigts s'effectue dans des conditions peu pratiques, en raison de la consistance graisseuse des pannes, du milieu mouillé et de la température interne que présentent les porcs.

En outre, ce travail nécessite, de la part de l'opérateur, une dépense physique élevée, tant pour l'arrachement que pour le décollement qui lui impose un mouvement élévateur simultané des deux bras conduisant, généralement, à une fatigue intense des articulations scapulo-humérales.

Il est fréquent de constater que le personnel chargé de ce travail connaît relativement rapidement des dégradations des mains et, notamment, des extrémités des doigts, ainsi que l'existence de tendinites, voire périarthrites chroniques, représentant des handicaps certains.

La difficulté de ce travail n'a jamais été sous estimée mais, jusqu'à présent, il n'a jamais été proposé de machines capables de remplacer l'intervention manuelle et d'exécuter, dans des bonnes conditions, l'arrachement et le décollement des pannes d'un porc en suivant la cadence variable d'abattage horaire des installations industrielles répondant à la demande.

L'objet de l'invention est, justement, de combler cette lacune, en proposant un nouveau procédé et une nouvelle machine pour réaliser, de façon automatique, l'arrachement et le décollement des pannes d'un porc abattu, échaudé, éviscéré et suspendu de façon traditionnelle par les pattes arrière à un convoyeur de déplacement.

L'objet de l'invention est de proposer un nouveau procédé et une nouvelle machine capables d'exécuter l'arrachement et le décollement des pannes, soit à poste fixe, soit à poste volant, en exécutant cette opération simultanément pour les deux flancs d'un même porc suspendu.

Un autre objet de l'invention est de proposer une technique d'arrachement et d'enlèvement qui permette, le cas échéant, de décoller totalement chaque panne du porc ou, encore, de les laisser attachées par les extrémités supérieures aux faces internes du bassin du porc, comme dans la méthode manuelle traditionnelle, de manière à leur faire subir la phase de réfrigération, après quoi elles sont définitivement détachées par sectionnement pour être dirigées vers un procédé de traitement, de conservation ou de transformation propre.

Un autre objectif de l'invention est de proposer un procédé ou une machine capables de réaliser une telle opération, en prenant en compte les pannes dans les meilleures conditions, quelles que soient les variations de morphologie que peuvent présenter ces amas graisseux ou, encore, les porcs les portant.

Un autre objectif de l'invention est de proposer une machine simple, robuste et fiable, pouvant être aisément intégrée aux installations automatiques industrielles d'abattage actuelles.

Pour atteindre les objectifs ci-dessus, le procédé de l'invention consiste à :
- suspendre par les pattes arrière un porc abattu et éviscéré,
- introduire, dans la cage thoracique ouverte du porc, une pince comportant des mâchoires à mors actifs orientés vers l'extérieur,
- placer les mors actifs sensiblement dans le plan des extrémités inférieures des pannes tapissant les faces internes des flancs du porc,
- ouvrir la pince pour appliquer les mors actifs contre les extrémités inférieures des pannes,
- presser, contre la face externe des flancs du porc, des contre-mors passifs en regard des mors actifs,
- faire sortir des mors actifs des moyens de préhension pour saisir les pannes simultanément,
- ouvrir les contre-mors passifs,

- fermer la pince pour rapprocher les mors actifs et arracher les extrémités inférieures des pannes saisies par les moyens de préhension,
- élever la pince pour décoller les pannes des faces internes des flancs du porc,
- et extraire la pince du porc.

L'invention a également pour objet une machine pour la mise en oeuvre du procédé ci-dessus, une telle machine étant caractérisée en ce qu'elle comprend :
- une structure porteuse déplaçable verticalement par un moteur sur des glissières de support et de guidage d'un bâti,
- un châssis porté par la structure, déplaçable horizontalement par un moteur et formant un pivot vertical,
- et une pince à deux branches montée sur le pivot et comportant :
. deux mâchoires saillant par rapport au châssis et possédant dans leurs faces extérieures des mors actifs ou moyens de préhension rétractables,
. des moyens de commande en ouverture-fermeture des branches de la pince et en extension-rétraction des moyens de préhension,
. deux contre-mors passifs montés pivotants sur les branches, sensiblement dans le plan horizontal des mors actifs pour être en outre situés extérieurement à ces derniers,
. et des moyens de commande en course d'ouverture-fermeture relative des contre-mors par rapport aux mors.

Diverses autres caractéristiques ressortent de la description faite ci-dessous en référence aux dessins annexés qui montrent, à titre d'exemples non limitatifs, des formes de réalisation de l'objet de l'invention.

La **fig. 1** est une élévation latérale schématique illustrant le procédé et la machine selon l'invention.

Les **fig. 2 à 9** sont des vues schématiques mettant en évidence différentes phases particulières du procédé de l'invention.

La **fig. 10** est une vue en plan prise, à plus grande échelle, selon la ligne X-X de la **fig. 1**.

La **fig. 11** est une vue latérale prise selon la ligne **XI-XI** de la **fig. 10**.

La **fig. 12** est une coupe transversale prise, à plus grande échelle, selon la ligne **XII-XII** de la **fig. 1**.

Les **fig. 13 à 15** sont des élévations partielles, partie en coupe, prises selon les lignes **XIII-XIII** à **XV-XV** de la **fig. 12**.

La **fig. 16** est une vue analogue à la **fig. 12**, illustrant une autre position caractéristique du fonctionnement du même organe.

La **fig. 17** est une coupe-élévation analogue à la **fig. 13**, illustrant une variante de réalisation.

La **fig. 18** est une coupe transversale prise selon la ligne **XVIII-XVIII** de la **fig. 17**.

La **fig. 19** est une coupe transversale correspondant à la **fig. 18** et illustrant une autre position caractéristique de certains des éléments constitutifs de l'organe de la machine.

La **fig. 20** est une vue latérale schématique représentant une variante de réalisation de la machine.

Les **fig. 21** et **22** sont des schémas montrant deux phases particulières de fonctionnement de la machine selon la **fig. 20**.

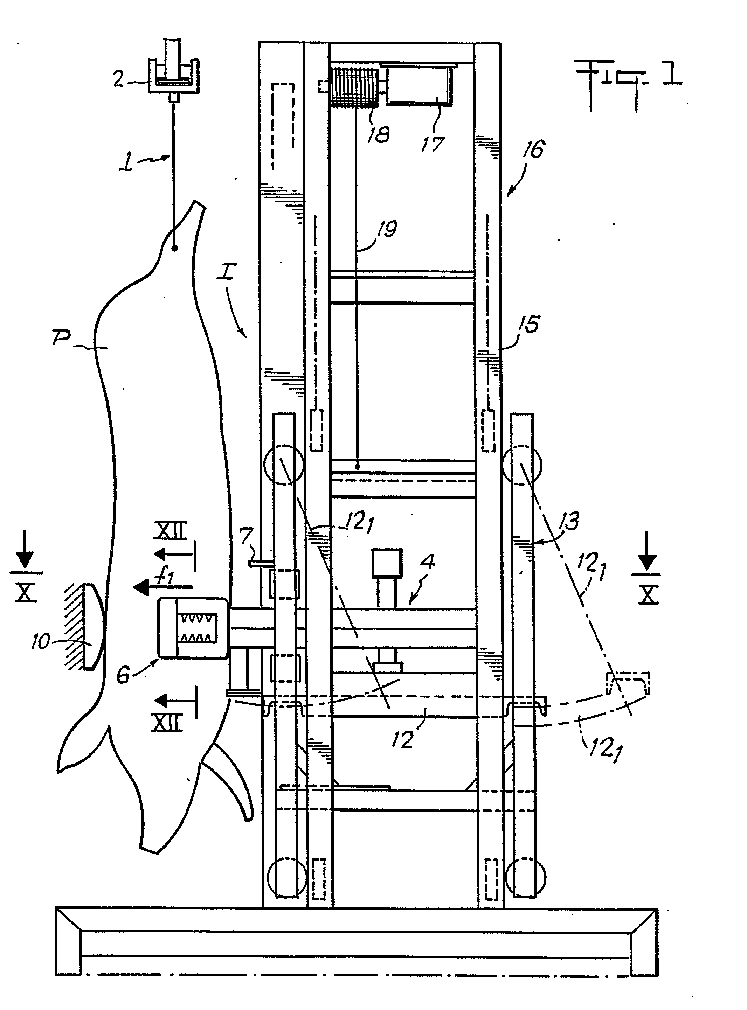

Les **fig. 1** et **2** ont pour objectif de situer dans quel contexte se place l'objet de l'invention pour régler le problème posé.

Ainsi que cela est énoncé ci-dessus, le domaine technique concerné est celui de l'abattage industriel de porcs **P** qui, après l'abattage proprement dit, sont suspendus par les pattes arrière et par l'intermédiaire d'un palonnier **1** à un convoyeur **2** les entraînant en défilement continu ou pas à pas devant des postes ou stations d'intervention.

Après abattage, les porcs **P** sont échaudés, épilés, flambés, brossés et éviscérés, c'est-à-dire qu'ils sont ouverts le long de la face ventrale abdominale, ainsi que le long de la cage thoracique, de manière à ménager un accès pour l'extraction des viscères et des abats. Après cette opération, les porcs **P** sont amenés, successivement, par le convoyeur **2** face à un poste **I** où se déroulent l'arrachement et le décollement des deux pannes p! et p@ qui sont constituées par des amas graisseux tapissant les faces internes des flancs **3** ouverts de la carcasse du porc **P**. De telles pannes p!, p@ s'étendent, généralement, depuis un niveau inférieur correspondant sensiblement à la deuxième tétine avant jusque, sensiblement, la moitié de l'abdomen.

L'objet de l'invention vise à réaliser l'arrachement et le décollement des deux pannes, de façon automatique et sans intervention manuelle.

A cette fin, comme cela apparaît à la **fig. 2**, le procédé de l'invention consiste à présenter, face à l'ouverture thoracico-abdominale **O** d'un porc **P** suspendu par les pattes arrière, abattu et éviscéré, une pince **4** comportant deux mâchoires parallèles **5** conformées de manière à se présenter sous la forme d'une tête de pénétration **6** apte à pouvoir être introduite entre les lèvres de l'ouverture **O**. La pince **4** a ceci de particulier qu'elle comporte des mâchoires **5**, dites à mors actifs à partir de leurs faces latérales extérieures opposées.

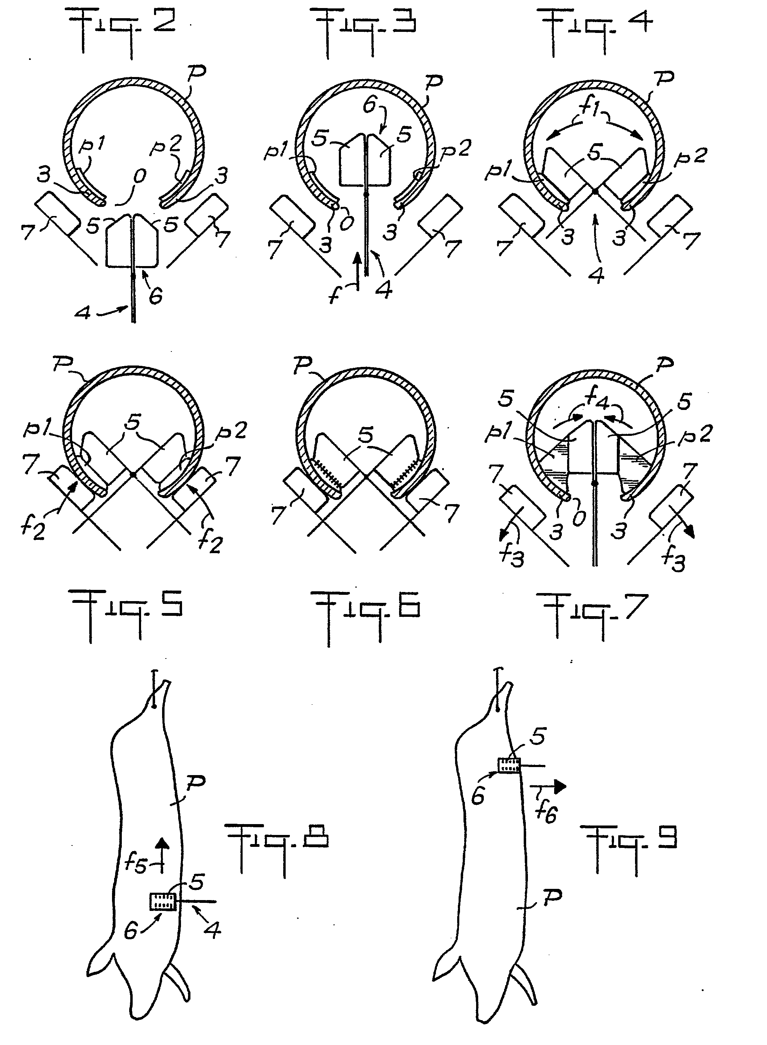

Une seconde phase du procédé consiste à introduire la tête **6** à l'intérieur du porc, comme illustré par la flèche f à la **fig. 3** et d'amener cette tête **6** sensiblement dans le plan horizontal des parties terminales inférieures des pannes p! et p@, c'est-à-dire au voisinage des deuxièmes tétines avant. Selon la morphologie du porc **P**, cette phase peut être amorcée en prévoyant une introduction de la tête **6** à partir de l'extrémité supérieure de l'ouverture **O**, c'est-à-dire dans la région subabdominale ou, au contraire, à partir de l'extrémité inférieure correspondant à la région thoracique. Dans le premier cas, la tête **6** est introduite puis, ensuite, soumise à un déplacement descendant à l'intérieur de la carcasse du porc, de manière à atteindre le plan horizontal de référence ci-dessus. Dans le second cas, la tête **6** est introduite au plus bas de l'ouverture thoracique **O**, puis soumise à un déplacement ascendant, de manière à atteindre le même plan de référence.

L'arrêt de la tête **6** dans la position requise peut être apprécié de façon automatique, en prenant, par exemple, pour référence les deuxièmes tétines avant, par l'intermédiaire d'un détecteur 7, illustré à la fig. 1.

Selon une autre phase du procédé, telle qu'illustrée par la fig. 4, la pince 4 est commandée pour ouvrir les mâchoires 5 qui sont écartées l'une de l'autre selon les flèches f! à l'intérieur de la carcasse, de manière à être plaquées contre les parties terminales inférieures des pannes p!et p@.

Une autre phase consiste alors à venir appliquer, sur la face extérieure des flancs 3 de la carcasse du porc P, des contre-mors 7 sollicités dans le sens des flèches f@, tel qu'illustré par la fig. 5. Les contre-mors 7 pressent ainsi les faces internes des flancs 3 et, plus particulièrement, les pannes p! et p@ contre les faces extérieures des mâchoires 5. De préférence, les contre-mors 7 agissent pour infléchir localement les flancs 3, de manière à les faire partiellement pénétrer à l'intérieur des mâchoires.

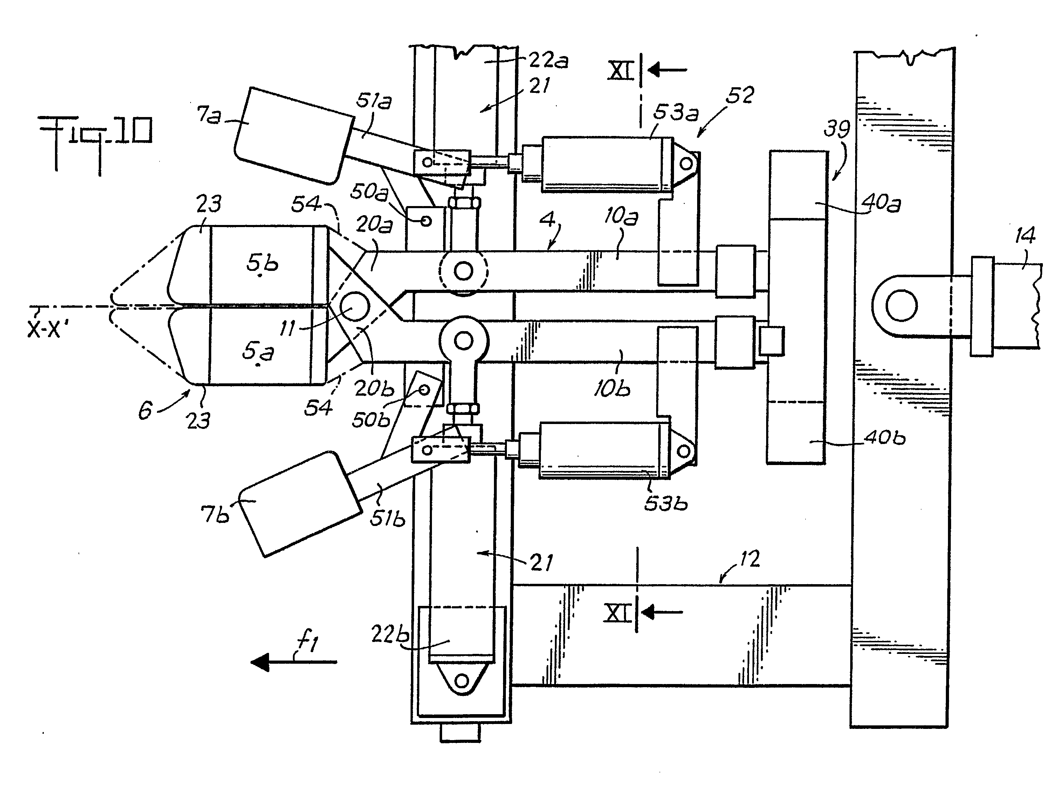

Selon une autre phase du procédé, illustrée par la fig. 6, les mâchoires 5 sont commandées pour saisir, par l'intermédiaire des mors actifs ou moyens de préhension agissant dans le plan de leur face extérieure, les extrémités inférieures des pannes p! et p@ et, plus particulièrement, les parties de ces dernières poussées à l'intérieur des faces extérieures des mâchoires 5 par l'action des contre-mors 7.

Lorsque les mors actifs ou moyens de préhension des mâchoires 5 ont saisi les pannes p!, p@, les contre-mors 7 sont commandés en écartement dans le sens des flèchesf# (fig. 7), de manière à être éloignés des faces extérieures des flancs 3. Cette phase est complétée par la commande de la pince 4, en vue de faire mouvoir les mâchoires 5 dans le sens des flèches f$ pour les ramener l'une contre l'autre, dans une position comparable à celle occupée lors de la présentation, telle qu'illustrée par la fig. 2. Cette phase du procédé intervient, sans qu'il y ait de déplacement relatif entre la pince 4 et la carcasse du porc P, de sorte que le rapprochement des mâchoires 5 produit l'arrachement des parties terminales des pannesp! et p@ par rapport aux faces internes des flancs 3 de la carcasse du porc P.

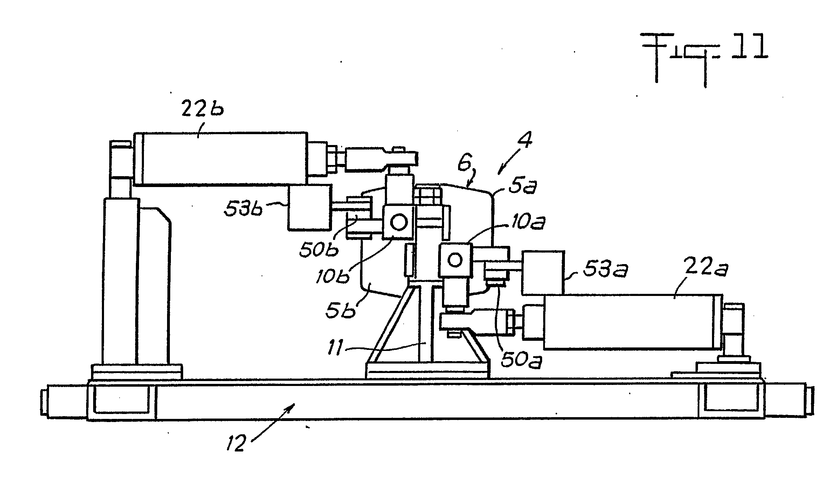

Une phase subséquente du procédé consiste alors à déplacer la pince 4 selon un mouvement ascendant, figuré par la flèche f% à la fig. 8. Depuis la position de référence horizontale initiale, ce déplacement produit, par conséquent, le décollement progressif des pannes entraînées par les mâchoires 5 à partir de leurs extrémités inférieures saisies par ces dernières. Les pannes p! et p@ sont donc ainsi progressivement décollées jusqu'à ce que les mâchoires 5 atteignent une position d'élévation maximale, telle qu'illustrée par la fig. 9.

Cette position peut être celle donnant lieu à un décollement complet des pannes qui sont alors extraites du porc P par retrait de la tête 6 selon là flèche f^. Cependant, dans une phase du procédé, généralement plus pratiquement mise en oeuvre, cette position d'élévation maximale correspond à un arrachement-décollement sur la majeure partie de la longueur des pannes qui restent, toutefois, attachées par leur extrémité supérieure. Dans cette position, la dernière phase du procédé consiste alors à dessaisir les pannes en commandant inversement les moyens de préhension, puis en déplaçant la pince 4 dans le sens de la flèche f^, pour extraire la tête 6 de l'intérieur de la carcasse. Le porc peut alors être conduit vers d'autres postes d'intervention jusqu'à la station de réfrigération ou à la sortie de laquelle interviendra ensuite le sectionnement des pannes p!et p@ réfrigérées.

Les différentes phases ci-dessus peuvent se dérouler successivement à poste fixe, c'est-à-dire lorsque le porc P est amené, puis immobilisé, face au poste I ou à poste volant lorsque le porc P est entraîné en défilement constant. Dans un tel cas, les différents mouvements imposés à la pince 4 sont combinés avec une translation concomittante de même vitesse et de même sens que le défilement imposé au porc P par le convoyeur 2.

Dans les deux cas, la phase d'introduction de la tête de pénétration 6 à partir de la base de l'ouverture O thoracique est, de préférence, conduite en prévoyant de disposer le porc P contre un appui dorsal 10, tel qu'une glissière horizontale. Cet appui 10 constitue une butée s'opposant au balancement ou déplacement du porc P lors de l'introduction de la tête 6 dans le sens de la flèche f, tel que décrit en référence à la fig. 3.

La mise en oeuvre du procédé de l'invention fait donc intervenir une machine réalisée sous la forme d'une pince, comportant deux mâchoires écartables, présentant la caractéristique de posséder des moyens de préhension susceptibles d'être escamotés ou rétractés par rapport aux faces extérieures ouvertes et de pouvoir être commandés en saillie par rapport à ces faces extérieures, de façon à pouvoir saisir les parties terminales inférieures des pannes p! et p@. Cette machine se caractérise aussi par la mise en oeuvre de contre-mors venant exercer, sur la face extérieure des flancs 3, une pression ponctuelle pour soumettre ces flancs à une inflexion saillante interne facilitant la saisie des pannes par les mors actifs ou moyens de préhension commandés en course active.

Différents modes de réalisation de la pince 4 peuvent être retenus pour lui faire assumer les fonctions ci-dessus. Il apparaît que de très bons résultats sont obtenus en prévoyant de réaliser les mâchoires 5 de manière qu'elles comportent des mors actifs constitués sous la forme de griffes mobiles.

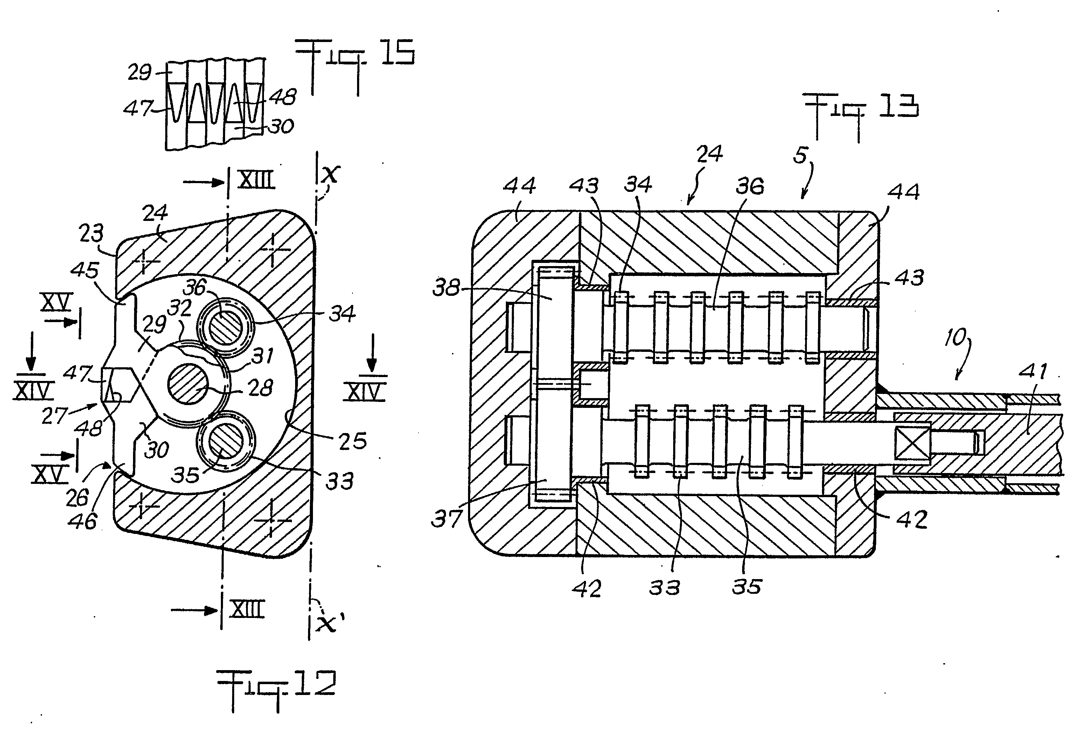

Les fig. 10 et 11 montrent, à titre d'exemple, en relation avec la fig. 1, une forme de réalisation préférée de la pince 4 qui apparaît, principalement, constituée par deux branches 10a et 10b. Ces deux branches sont montées articulées sur un pivot vertical 11 porté par un châssis 12 monté sur une structure porteuse 13. Le châssis 12 peut être déplacé relativement par un organe moteur approprié 14, dans le sens de la flèche f! à partir de la position de repos illustrée aux fig. 1 et 10. L'organe moteur 14 peut être constitué par un vérin imposant un déplacement purement linéaire au châssis 12, monté alors sur des glissières présentées dans la direction correspondante par la structure 13. Comme le montre la fig. 1, la liaison entre le châssis 12 et la structure 13 peut être prévue de telle manière que le déplacement, dans le sens de la flèche f! soit du type pendulaire. Dans un tel cas, le châssis 12 est suspendu à deux

parallélogrammes déformables 12₁ articulés sur des axes 12ₐ portés par la structure 13.

La structure porteuse 13 est montée mobile verticalement sur des glissières de guidage 15 formées par un bâti 16 s'étendant parallèlement au convoyeur 2 en étant intégré à une structure d'une installation d'abattage industriel. La structure porteuse 13 peut être déplacée verticalement, selon un mouvement ascendant ou descendant, par l'intermédiaire d'un organe moteur 17 incluant, par exemple, un tambour 18 d'enroulement-déroulement d'un câble de suspension 19 ou analogue accroché à la partie supérieure de la structure 13. Le déplacement vertical imposé à la structure 13 peut être actif, dans le sens ascendant, et passif, dans le sens descendant. Il doit être considéré qu'un déplacement actif dans les deux sens peut également intervenir et que des moyens de motorisation, autres que ceux donnés à titre d'exemple, peuvent aussi être choisis.

Les branches 10a et 10b peuvent être placées dans le même plan horizontal ou, au contraire, être décalées relativement, comme illustré par la **fig. 11.** Les branches 10a et 10b sont montées sur le pivot 11, à la manière d'une paire de ciseaux et comportent, à cette fin, des entablures 20a et 20b se croisant, portant, respectivement, les mâchoires 5a et 5b qui font ainsi saillie à l'extérieur du châssis 12 en s'étendant au-delà du pivot 11. Les branches 10a et 10b sont associées à des moyens 21 de commande en ouverture-fermeture des mâchoires 5a et 5b. Les moyens 21 peuvent être constitués, par exemple, par des vérins 22a et 22b portés par le châssis 12. Il est évident que d'autres moteurs ou actionneurs peuvent être envisagés et que, dans certains cas, un seul moyen de commande en ouverture-fermeture peut être prévu pour coopérer simultanément avec les deux branches 10a et 10b.

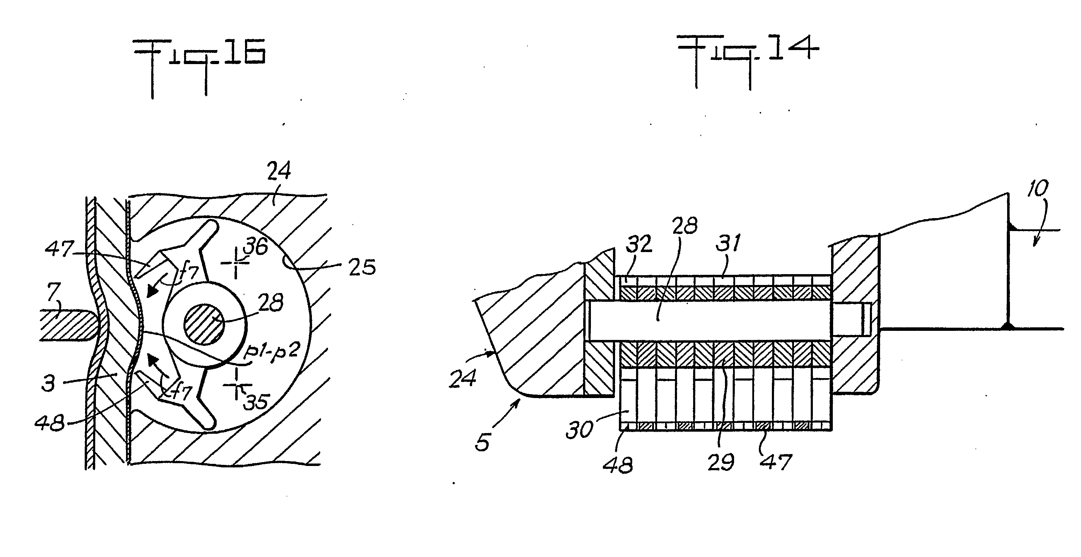

Les mâchoires 5a et 5b à mors actifs sont réalisées de façon symétrique par rapport à un plan vertical x-xₑ séparant les mâchoires en position d'accolement. Pour cette raison, seule une mâchoire est décrite ci-dessous en référence aux **fig. 12 à 16.**

Chaque mâchoire 5 comprend un corps ou boîtier 24 délimitant intérieurement un logement cylindrique 25 s'ouvrant extérieurement dans le plan de la face extérieure 23 par une fenêtre 26 de forme rectangulaire. Le logement 25 contient des mors actifs ou des moyens de préhension 27 qui peuvent être escamotés ou rétractés totalement à l'intérieur du logement 25 ou faire saillie, en partie, hors du plan de la fenêtre 26, comme cela apparaît à la **fig. 12.** Dans un exemple de réalisation, les moyens de préhension ou mors actifs 27 comprennent, montées sur un axe fixe 28 porté par le boîtier 24, deux séries de griffes 29 et 30 intercalées. Chaque griffe 29 et 30 comporte un secteur denté 31, 32 engrenant, en permanence, avec un pignon complémentaire 33, 34, formé ou rapporté, pour la série de griffes 29, sur un arbre 35 menant et, pour la série de griffes 30, sur un arbre 36 mené. A titre d'exemple, l'arbre menant 35 peut être en prise par les pignons 37 et 38 avec l'arbre mené 36. Dans tous les cas, les moyens d'entraînement en rotation des arbres 35 et 36 sont choisis pour les soumettre à des rotations angulaires partielles inverses synchrones. L'arbre menant 35 reçoit son mouvement d'entraînement en rotation à partir d'un moyen 39 de commande en rétraction ou extension des griffes 29, 30. Dans l'exemple illustré par la **fig. 10,** le moyen 39 est constitué par deux moteurs 40a et 40b portés par les branches 10a et 10b et actionnant chacun une allonge 41 s'étendant à l'intérieur de la branche 10 correspondante pour entraîner directement l'arbre menant 35.

Les arbres 35 et 36 sont montés dans des paliers 42 et 43, par exemple du type à bague lisse, adaptés dans des flasques 44 constitutifs du boîtier 24.

Comme cela apparaît aux **fig. 12, 15** et **16,** chaque griffe 29 ou 30 forme une extension sensiblement radiale, se prolongeant par un talon 45 ou 46 coopérant en contact de surface avec le logement cylindrique 25 et par une dent 47, 48. Les dents 47 et 48 sont susceptibles de s'interpénétrer dans la position d'extension hors du plan de la fenêtre 26, tel qu'illustré par la **fig. 12,** ou d'être écartées relativement dans la position d'escamotage ou de rétraction à l'intérieur du logement 25, tel qu'illustré par la **fig. 16.**

Dans les phases selon les **fig. 3, 4** et **5,** décrites en relation avec le procédé ci-dessus, les organes moteurs 40a et 40b commandent la rétraction des moyens de préhension, de telle sorte que les griffes 29 et 30 occupent la position selon la **fig. 16.** Dans la phase du procédé selon la **fig. 5,** les contre-mors 7 sont appliqués contre la face extérieure des flancs 3 qui sont ainsi pressés contre les faces extérieures 23 des mors 5. Dans cette position, les organes moteurs 40a et 40b sont commandés pour solliciter le pivotement des griffes 29 et 30 dans le sens des flèches fₐ amenant les dents 47 et 48 à pénétrer dans l'amas graisseux constitutif des pannes p₁ et p₀ qui sont ainsi saisies, d'une part, par pénétration rotative des dents 47 et 48 à l'intérieur d'eux-mêmes et, d'autre part, par coïncement résultant de l'interpénétration de ces dents, tel que cela apparaît à la **fig. 15.** Les pannes sont ainsi prises en charge et saisies fermement pour être, dans un premier temps, arrachées de la face interne des flancs 3 qu'elles tapissent lors de la commande des mâchoires 5a et 5b en course de fermeture selon les flèches f₀ de la **fig. 7.**

Les **fig. 10** et **11** montrent que les branches 10a et 10b portent, également, par des axes d'articulation 50a et 50b, des bras de levier 51a et 51b, en bout desquels sont fixés les contre-mors 7a et 7b, dont la position axiale peut, éventuellement, être réglable. Ces contre-mors sont constitués par des plaques rigides de faible épaisseur dont la longueur est, généralement, inférieure à la mesure correspondante des fenêtres 26. Les contre-mors 7a et 7b s'étendent sensiblement dans un même plan horizontal correspondant, approximativement, à un plan passant par les axes 28 des mâchoires. Les bras de levier 51a et 51b sont réunis à des moyens 52 de commande en ouverture-fermeture relative par rapport aux mâchoires 5a et 5b. Ces moyens 52 peuvent être constitués par deux vérins 53a et 53b portés par les branches 10a et 10b pour agir sélectivement sur les bras de levier 51a et 51b. Il doit, toutefois, être retenu que les vérins 53a et 53b pourraient aussi être remplacés par d'autres actionneurs, voire par un actionneur unique agissant, simultanément, sur les deux bras de levier **51a** et **51b**.

La **fig. 10** montre que, dans certains cas, les mâchoires **5a** et **5b** peuvent être réalisées pour comporter des boîtiers **24** conformés pour définir ensemble, comme cela est illustré en trait mixte, lorsqu'ils occupent une position fermée en étant disposés côte à côte, une sorte de tête cunéiforme de pénétration **6** facilitant l'écartement des lèvres délimitant l'ouverture thoracico-abdominale **O**. Une telle conformation résulte, principalement, de l'usinage des flasques extrêmes antérieurs **44**. La **fig. 10** montre qu'il peut être prévu de réaliser les flasques postérieurs **44** de manière à leur faire comporter des rampes **54** facilitant le dégagement, dans le sens de la flèche **f^**, par écartement progressif des lèvres délimitant l'ouverture thoracico-abdominale **O**.

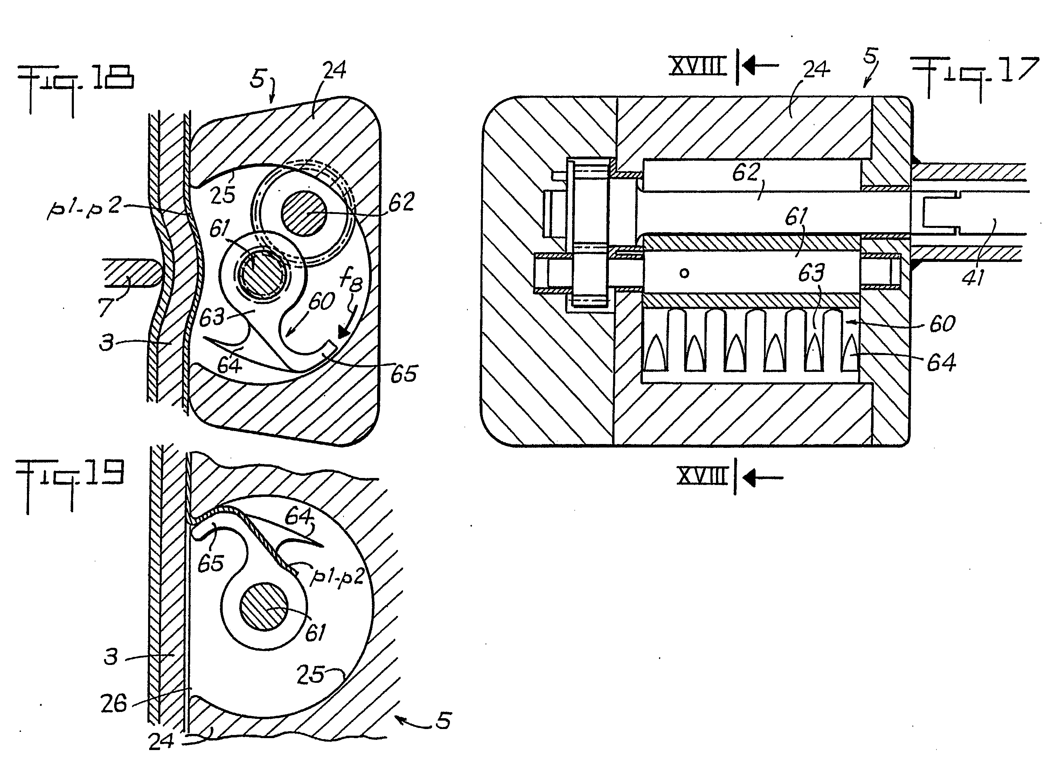

Les **fig. 17** à **19** montrent une variante de réalisation selon laquelle le mors actif ou le moyen de préhension de chaque mâchoire **5** comporte une seule série de griffes **60** calées angulairement et axialement sur un arbre **61** entraîné en rotation par un arbre **62** commandé par l'allonge **41**. Dans une telle réalisation, les griffes **60** comportent chacune un prolongement radial **63** formant une dent acérée **64** s'étendant à l'opposé d'un talon **65**. Dans la position de rétraction, le jeu de griffes **60** occupe une position basse à l'intérieur du logement **25**, les différentes dents acérées **64** étant orientées de façon inclinée ascendante en direction de la fenêtre **26**.

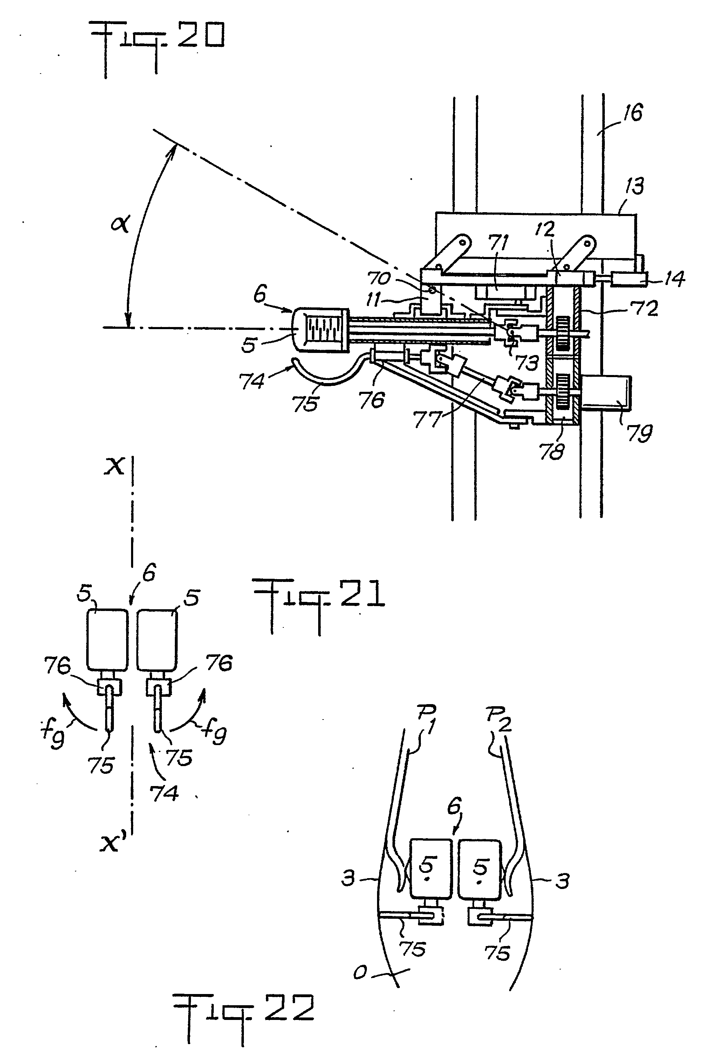

Les organes moteurs **40a** et **40b** sont commandés pour faire pivoter le jeu de griffes **60**, dans le sens de la flèche **f\*** lors de la phase de saisie des pannes **p!** **p@**, tel qu'illustré à la **fig. 6** en relation avec le procédé ci-dessus. Les dents **64** sont ainsi amenées à pénétrer du bas vers le haut à l'intérieur des parties terminales inférieures des pannes **p!** **p@**, pour en assurer progressivement le début d'arrachement, ainsi que le retournement partiel à l'intérieur des logements **25**. De cette manière, comme illustré par la **fig. 19**, les talons **65** réalisent un pincement des pannes **p!** **p@** contre la paroi périphérique cylindrique des logements **25** et contribuent ainsi, en combinaison avec la pénétration des dents **64**, à saisir fermement les parties terminales inférieures des pannes **p!** et **p@** pour en assurer l'arrachement efficace lors de la course de fermeture des mâchoires **5** selon les flèches **f$** en relation avec la **fig. 7**.

Dans une variante de réalisation selon la **fig. 20**, il est prévu aussi de réaliser la machine de façon que la pince **4** soit suspendue au pivot **11** s'étendant à partir de la face inférieure du châssis **12** superposé. Cette variante de réalisation permet de prévoir un pivot **11** articulé sur un axe horizontal **70** porté par le châssis. Dans un tel cas, le pivot **11** est alors relié à un actionneur **71** fixé sur le châssis.

Il devient ainsi possible, par la commande de l'actionneur **71**, de faire pivoter la pince **4** sur l'axe horizontal et de lui conférer une inclinaison ascendante selon un angle $\alpha$ lors de l'introduction de la tête **6** dans l'ouverture **O**. L'angle $\alpha$ peut être compris entre 0 et 45°. Cet angle $\alpha$ facilite la pénétration de la tête **6** et, surtout, la saisie des pannes **p!** et **p@**.

Après saisie et arrachement éventuel, la pince **4** est ramenée en position horizontale avant d'être déplacée selon la flèche **f\*** (**fig. 8**) pour provoquer le décollement des pannes.

Dans un tel cas, l'entraînement des allonges **41** peut être assuré à partir d'une boîte **72** de transmission et réduction par des demi-arbres **73** à cardans et à cannelures.

Selon la variante illustrée par la **fig. 20**, la suspension de la machine au pivot **11** articulé permet aussi de monter un écarteur rotatif **74** sous chaque mâchoire **5**. Chaque écarteur **74** est réalisé sous la forme d'un arceau **75** s'étendant en porte-à-faux à partir d'un palier **76** suspendu à la branche **10** correspondante. L'arceau **75** est accouplé à un arbre **77** mû en rotations angulaires partielles alternées par une boîte de transmission-réduction **78** adaptée à la sortie d'un moteur **79**. Dans le cas de mise en oeuvre d'un pivot **11** articulé, l'arbre **77** est, de préférence, à double-cardan et à cannelures.

Chaque arceau occupe, normalement, une position de repos, telle qu'illustrée par la **fig. 21**. Dans cette position, les arceaux s'étendent parallèlement et de part et d'autre du plan **x-xE**. Le fonctionnement des écarteurs intervient de la façon suivante, en relation avec les phases décrites en référence aux **fig. 6** et **7**.

La **fig. 6** correspond, ainsi que cela est dit ci-dessus, à la saisie des parties terminales inférieures de pannes **p!** et **p@** par les mâchoires **5** écartées. Les contre-mors **7** sont ensuite commandés en ouvertures, puis les branches **10** actionnées en fermeture pour donner lieu, comme représenté par la **fig. 7**, à la phase d'arrachement des pannes. Dans cette phase et simultanément à la fermeture des branches **10**, les écarteurs sont actionnés pour faire tourner les arceaux **75** dans le sens des flèches **f (**, de manière à leur faire prendre appui sur les faces internes des flancs **3**. Comme cela ressort de la **fig. 22**, la fermeture des branches **10** et l'écartement des flancs **3** par les arceaux **75** permettent de favoriser l'arrachement des pannes **p!** et **p@** qui sont ensuite décollées en soumettant la pince **5** à un déplacement ascendant au cours duquel les écarteurs **74** peuvent être, soit maintenus ouverts, soit ramenés en position fermée, comme illustré par la **fig. 21**.

Ainsi que cela ressort de ce qui précède, la machine selon l'invention est de structure simple, robuste et fiable et peut travailler durablement dans les conditions difficiles régnant dans un abattoir. Cette machine permet la mise en oeuvre du procédé et l'arrachement-décollement simultané des deux pannes d'un porc, quelles que soient les caractéristiques morphologiques de ce dernier.

L'invention n'est pas limitée aux exemples décrits et représentés, car diverses modifications peuvent y être apportées sans sortir du cadre défini par les revendications.

**Revendications**

1 - Procédé pour arracher les pannes d'un porc abattu, caractérisé en ce qu'il consiste à :
- suspendre par les pattes arrière un porc abattu et éviscéré,

- introduire, dans la cage thoracique ouverte du porc, une pince comportant des mâchoires à mors actifs orientés vers l'extérieur,
- placer les mors actifs sensiblement dans le plan des extrémités inférieures des pannes tapissant les faces internes des flancs du porc,
- ouvrir la pince pour appliquer les mors actifs contre les extrémités inférieures des pannes,
- presser, contre la face externe des flancs du porc, des contre-mors passifs en regard des mors actifs,
- faire sortir des mors actifs des moyens de préhension pour saisir les pannes simultanément,
- ouvrir les contre-mors passifs,
- fermer la pince pour rapprocher les mors actifs et arracher les extrémités inférieures des pannes saisies par les moyens de préhension,
- élever la pince pour décoller les pannes des faces internes des flancs du porc,
- et extraire la pince du porc.

2 - Procédé selon la revendication 1, caractérisé en ce qu'il consiste à :
- élever la pince sur une hauteur inférieure à la longueur des pannes pour laisser celles-ci adhérer par leur partie supérieure aux faces internes des flancs du porc,
- rétracter les moyens de préhension dans les mors actifs pour dessaisir les pannes,
- descendre la pince et l'extraire du porc.

3 - Procédé selon la revendication 1 ou 2, caractérisé en ce que la pince est introduite en partie haute du porc suspendu, puis descendue jusqu'à placer les mors actifs dans le plan des extrémités inférieures des pannes.

4 - Procédé selon la revendication 1 ou 2, caractérisé en ce que la pince est introduite en partie basse du porc qui est maintenu immobile contre un appui dorsal, puis placée dans le plan des extrémités inférieures des pannes.

5 - Procédé selon l'une des revendications 1 à 4, caractérisé en ce que la pince est introduite dans un porc suspendu à poste fixe.

6 - Procédé selon l'une des revendications 1 à 4, caractérisé en ce que la pince est introduite dans le porc puis est soumise à une translation de même sens et de même vitesse qu'un défilement continu imposé au porc suspendu.

7 Procédé selon l'une des revendications 1 à 6, caractérisé en ce qu'il consiste à engager la pince dans le porc pour conférer aux mors actifs une inclinaison ascendante.

8 - Procédé selon l'une des revendications 1 à 7, caractérisé en ce qu'il consiste à fermer la pince pour rapprocher les mors actifs et à ouvrir, simultanément, des écarteurs portés par la pince et prenant appui sur les faces internes des flancs du porc.

9 - Machine pour arracher les pannes d'un porc abattu et suspendu, caractérisée en ce qu'elle comprend :
- une structure porteuse (13) déplaçable verticalement par un moteur (17) sur des glissières de support et de guidage (15) d'un bâti (16),
- un châssis (12) porté par la structure, déplaçable horizontalement par un moteur (14) et formant un pivot vertical (11),
- et une pince (4) à deux branches (10) montée sur le pivot et comportant :
. deux mâchoires (5) saillant par rapport au châssis et possédant dans leurs faces extérieures des mors actifs ou moyens de préhension rétractables (27),
. des moyens (21 et 39) de commande en ouverture-fermeture des branches de la pince et en extension-rétraction des moyens de préhension,
. deux contre-mors (7) passifs montés pivotants sur les branches (10), sensiblement dans le plan horizontal des mors actifs pour être en outre situés extérieurement à ces derniers,
. et des moyens (52) de commande en course d'ouverture-fermeture relative des contre-mors par rapport aux mors.

10 - Machine selon la revendication 9, caractérisée en ce que les mâchoires (5) sont réalisées sous la forme de deux boîtiers (24) complémentaires délimitant des logements cylindriques (25) sécant avec les faces (23) sensiblement verticales extérieures et contenant les moyens de préhension (27).

11 - Machine selon la revendication 10, caractérisée en ce que les moyens de préhension (27) sont constitués par des jeux de griffes rotatives aptes à être effacées dans les logements ou sorties de ces derniers pour saisir les pannes.

12 - Machine selon la revendication 11, caractérisée en ce que les moyens de préhension sont constitués pour chaque boîtier (24) par deux jeux de griffes (29, 30) associées en rotations inverses synchrones et dont les griffes (47, 48) se croisent et s'interpénètrent en position de fermeture relative dans laquelle elles saisissent les pannes.

13 - Machine selon la revendication 11, caractérisée en ce que les moyens de préhension sont constitués par un seul jeu de griffes (60) tournantes formées par des dents acérées (64) s'étendant à partir d'un talon (65) de pincement coopérant avec la face de révolution interne du logement (25) à partir de la face ouverte extérieure (23) du boîtier pour pincer la panne arrachée.

14 - Machine selon l'une des revendications 10 à 13, caractérisée en ce que les moyens de préhension sont entraînés en rotation en course d'ouverture-fermeture et inversement par un moyen (40a, 40b) propre à chaque branche de la pince.

15 - Machine selon la revendication 10, caractérisée en ce que les boîtiers (24) sont conformés pour définir ensemble dans la position fermée de la pince sensiblement une tête de pénétration cunéiforme (6) possédant un plan de symétrie vertical (x-xᴇ).

16 - Machine selon la revendication 9, caractérisée en ce que les moyens (52) de commande en ouverture-fermeture des contre-mors (7) sont portés par les branches.

17 - Machine selon la revendication 9, caractérisée en ce que la structure porteuse est associée à des moyens (7) de détection de la base des pannes.

18 - Machine selon la revendication 9, caractérisée en ce que la pince (4) est montée sur un pivot (11) suspendu par un axe d'articulation horizontal (70) à un châssis (12) superposé sur lequel prend appui un actionneur (71) agissant sur le pivot.

**19** - Machine selon la revendication 9, 10 ou 18, caractérisée en ce que la pince comporte, pour chaque mâchoire (5), un écarteur (74) constitué par un arceau (75) s'étendant parallèlement au plan de symétrie de la tête (6) et sous la mâchoire correspondante en étant porté par un palier de rotation (76), ledit arceau (75) étant accouplé à un organe moteur (79) d'entraînement en rotations angulaires partielles alternées.

## Claims

1. A process for pulling off the belly strips from a hog carcass, characterized in that it consists in:
- suspending an eviscerated hog carcass by its hind legs,
- introducing, in the hog's open rib cage, a clamp equipped with inwardly-directed active jaws,
- placing the active jaws substantially inside the plane of the lower end portions of the belly strips lining the internal faces of the hog's sides,
- opening the clamp in order to place the active jaws against the lower end portions of the belly strips,
- pressing, against the external face of the hog's sides, passive counter-jaws, in facing relationship to said active jaws,
- bringing out of said active jaws, means for gripping the belly strips simultaneously,
- opening out the passive counter-jaws,
- closing the clamp so as to bring the active jaws close together and pull off the lower end portions of the belly strips gripped by said gripping means;
- raising the clamp in order to loosen the belly strips from the internal faces of the hog's sides, and
- extracting the clamp from the hog.

2. Process according to claim 1, characterized in that it consists in:
- raising the clamp over a height smaller than the length of the belly strips in order to leave the latter attached by their upper portion to the internal faces of the hog's sides,
- retracting the gripping means in the active jaws for releasing said belly strips,
- lowering the clamp and bringing it out of the hog.

3. Process according to claim 1 or 2, characterized in that the clamp is introduced by the top part of the suspended hog and then lowered down until the active grips or jaws are brought in the plane of the lower end portions of the belly strips.

4. Process according to claim 1 or 2, characterized in that the clamp is introduced by the bottom part of the hog which is immobilized in position against a back rest, and then placed in the plane of the lower end portions of the belly strips.

5. Process according to any one of claims 1 to 4, characterized in that the clamp is introduced into a hog suspended at a fixed station.

6. Process according to one of claims 1 to 4, characterized in that the clamp is introduced into the hog and is then imparted with a movement of translation of same direction and speed as a forward continuous movement imparted to the suspended hog.

7. Process according to one of claims 1 to 6, characterized in that it consists in introducing the clamp into the hog in such a way that the active grips are inclined upwardly.

8. Process according to one of claims 1 to 7, characterized in that it consists in closing the clamp in order to bring the active grips close together and to open, simultaneously, the expanders carried by the clamp and resting on the internal fares of the hog's side.

9. Machine for pulling off the belly strips from a suspended hog carcass, characterized in that it comprises:
- a supporting structure (13) which is vertically movable by means of a motor (17), over supporting and guide rails (15) mounted on a frame (16),
- a chassis (12) carried by said structure, which is horizontally movable by means of a motor (14) and forms a vertical pivot (11), and
- a two-branched (10) clamp (4) mounted on said pivot and comprising:
..two jaws (5) projecting with respect to the chassis and being equipped on their external faces with retractable active grips or other gripping means (27),
..means (21 and 39) for controlling the opening and closing of the branches of the clamp and for extending or retracting said gripping means,
..two passive counter-jaws (7) mounted for pivoting on the branches of the clamp (10), substantially inside the horizontal plane of said active grips, so as to be also situated outside the latter,
..and means (52) for controlling the relative opening and closing of the counter-jaws with respect to the grips.

10. Machine according to claim 9, characterized in that the jaws (5) are produced in the form of two complementary casings (24) defining cylindrical housings (25), secant with the substantially vertical external faces (23) and containing the gripping means (27).

11. Machine according to claim 10, characterized in that the gripping means (27) are constituted by sets of rotary claws capable of being retracted inside the housings or brought out therefrom for gripping the belly strips.

12. Machine according to claim 11, characterized in that the gripping means are constituted for each casing (24) by two sets of claws (29, 30) operationally coupled for rotating synchronously in reverse, said claws (47, 48) criss-crossing and interlocking in a relative closure position in which they grip the belly strips.

13. Machine according to claim 11, characterized in that the gripping means are constituted by only one set of rotary claws (60) formed by sharp teeth (64) extending from a gripping heel (65) which cooperates with the axi-symmetrical inner face of the housing (25), from the open outer face (23) of the casing in order to grip the pulled off belly strips.

14. Machine according to any one of claims 10, characterized in that the gripping means are driven in rotation on their opening-closing stroke and reverse, by means (40$\underline{a}$, 40$\underline{b}$) which are separate for each branch of the clamp.

15. Machine according to claim 10, characterized in that the casings (24) are so shaped as to define together, in the closed position of the clamp, a substantially wedge-shaped head (6) having a vertical plane of symmetry (x-x').

16. Machine according to claim 9, characterized in that the control means (52) for opening and closing the counter-jaws (7) are carried by the branches.

17. Machine according to claim 9, characterized in that the supporting structure is operationally coupled to means (7) for detecting the bottom part of the belly strips.

18. Machine according to claim 9, characterized in that the clamp (4) is mounted on a pivot (11) suspended by a horizontal articulation spindle (70) to a susperposed chassis (12) on which rests an actuator (71) controlling the pivot.

19. Machine according to claim 9, 10 or 18, characterized in that the clamp is equipped, for each jaw (5), with an expander (74) constituted by a bow (75) extending in parallel to the plane of symmetry of the head (6) and under the corresponding jaw, while being supported by a rotation bearing (76), said bow (75) being coupled to means (79) for imparting it with alternate partial angular rotary movements.

**Patentansprüche**

1. Verfahren zum Abtrennen der Fettstreifen eines geschlachteten Schweins, dadurch gekennzeichnet, daß es besteht aus:
– Aufhängen der Hinterfüße eines geschlachteten und ausgenommenen Schweins,
– Einführen einer Zange in den offenen Torax des Schweins, welche Klemmbacken mit aktiven Spannbacken aufweist, die nach außen gerichtet sind,
– Anordnen der aktiven Spannbacken im wesentlichen in der Ebene der unteren Enden der Fettstreifen, die die Innenseiten der Schweineflanken bedecken,
– Öffnen der Zange, um die aktiven Spannbacken gegen die unteren Enden der Fettstreifen zu bringen,
– Andrücken von passiven Gegenspannbacken gegenüber den aktiven Spannbacken gegen die Außenseite der Schweineflanken,
– Ausfahren aus den aktiven Spannbacken von Griffeinrichtungen, um die Fettstreifen gleichzeitig zu ergreifen,
– Öffnen der passiven Gegenspannbacken,
– Schließen der Zange, um die aktiven Spannbacken zusammenzuführen und die unteren Enden der Fettstreifen, die von den Griffeinrichtungen ergriffen werden, abzuziehen,
– Anheben der Zange, um die Fettstreifen von den Innenseiten der Schweineflanken abzutrennen, und
– Ausfahren der Zange aus dem Schwein.

2. Verfahren nach Anspruch 1, dadurch gekennzeichnet, daß es besteht aus:
– Anheben der Zange auf eine Höhe, die geringer ist als die Länge der Fettstreifen, um diese an ihrer oberen Partie an den Innenseiten der Schweineflanken anhaften zu lassen,
– Zurückziehen der Griffeinrichtungen in den aktiven Spannbacken, um die Fettstreifen loszulassen,
– Absenken der Zange und Ausbringen dieser aus dem Schwein.

3. Verfahren nach Anspruch 1 oder 2, dadurch gekennzeichnet, daß die Zange im oberen Bereich des aufgehängten Schweins eingeführt wird, danach abgesenkt wird, bis die aktiven Spannbacken in der Ebene der unteren Enden der Fettstreifen plaziert werden.

4. Verfahren nach Anspruch 1 oder 2, dadurch gekennzeichnet, daß die Zange im unteren Bereich des Schweins eingeführt wird, der unbeweglich gegen einen Rückenanschlag gehalten wird, sodann in die Ebene der unteren Enden der Fettstreifen plaziert wird.

5. Verfahren nach einem der Ansprüche 1 bis 4, dadurch gekennzeichnet, daß die Zange in ein Schwein eingeführt wird, das an einem festen Balken aufgehängt ist.

6. Verfahren nach einem der Ansprüche 1 bis 4, dadurch gekennzeichnet, daß die Zange in das Schwein eingeführt wird, sodann einer Translation in derselben Richtung und mit derselben Geschwindigkeit unterworfen wird, wie eine kontinuierliche Fortbewegung, die auf das aufgehängte Schwein aufgebracht wird.

7. Verfahren nach einem der Ansprüche 1 bis 6, dadurch gekennzeichnet, daß es daraus besteht, die Klammer in Eingriff mit dem Schwein zu bringen, um den aktiven Spannbacken eine aufsteigende Neigung zu verleihen.

8. Verfahren nach einem der Ansprüche 1 bis 7, dadurch gekennzeichnet, daß es daraus besteht, die Klammer zu schließen, um die aktiven Spannbacken zusammenzuführen, und gleichzeitig Beabstandungsvorrichtungen zu öffnen, die von der Klammer getragen werden und auf die Innenseiten der Schweineflanken drücken.

9. Vorrichtung zum Abtrennen von Fettstreifen eines geschlachteten und aufgehängten Schweins, dadurch gekennzeichnet, daß sie aufweist:
– eine Tragestruktur (13), die durch einen Motor (17) auf Trage- und Führungsschienen (15) eines Unterbaus (16) vertikal verschiebbar ist,
– einem von der Struktur getragenen Chassis (12), das horizontal durch einen Motor (14) verschiebbar ist und ein vertikales Gelenk (11) bildet, und
– einer Zange (4) mit zwei Armen (10), die auf dem Gelenk angeordnet sind mit:
– zwei Klemmbacken (5), die bezüglich des Chassis vorspringen und an ihren Außenseiten aktive Spannbacken oder einziehbare Griffeinrichtungen, (27) aufweisen,
– Einrichtungen (21 und 39) zum Öffnen und Schließen der Arme der Klammer und zum Ausfahren und Rückziehen der Griffeinrichtungen,
– zwei passive Gegenspannbacken (7), die schwenkbeweglich auf den Armen (10) im wesentlichen in der horizontalen Ebene der aktiven Spannbacken angeordnet sind, um weiterhin außerhalb von diesen angeordnet zu sein, und

— Einrichtungen (52) der Betätigung bzw. Steuerung während der relativen Öffnung und Schließung der Gegenspannbacken bezüglich der Spannbacken.

10. Vorrichtung nach Anspruch 9, dadurch gekennzeichnet, daß die Klemmbacken (5) in der Form von zwei komplementären Gehäusen (24) erzeugt sind, die zylindrische Aufnahmen (25) begrenzen, die sich mit den im wesentlichen vertikalen Außenseiten (23) schneiden und Griffeinrichtungen (27) aufweisen.

11. Vorrichtung nach Anspruch 10, dadurch gekennzeichnet, daß die Griffeinrichtungen (27) aus Sätzen von Drehklauen gebildet sind, die geeignet sind, in den Aufnahmen zu verschwinden oder aus diesen herauszutreten, um die Fettstreifen zu ergreifen.

12. Vorrichtung nach Anspruch 11, dadurch gekennzeichnet, daß die Griffeinrichtungen für jedes Gehäuse (24) durch zwei Klauensätze (29, 30) gebildet sind, die in umgekehrter synchroner Drehung zugeordnet sind, und deren Klauen (47, 48) sich kreuzen und in relativer Schließstellung ineinander greifen, in der sie die Fettstreifen abziehen.

13. Vorrichtung nach Anspruch 11, dadurch gekennzeichnet, daß die Griffeinrichtungen aus einem einzigen Satz von drehenden Klauen (60) gebildet sind, die durch spitze Zähne (64) gebildet sind, die sich von einem Einzwickansatz (65) aus erstrecken, der mit der inneren Drehseite der Aufnahme (25) ausgehend von der äußeren offenen Seite (23) des Gehäuses zusammenwirkt, um den abgetrennten Fettstreifen einzuklemmen.

14. Vorrichtung nach einem der Ansprüche 10 bis 13, dadurch gekennzeichnet, daß die Griffeinrichtungen während des Öffnens und Schließens und umgekehrt durch eine Einrichtung (40a, 40b) für jeden Arm der Klammer in Drehung versetzt werden.

15. Vorrichtung nach Anspruch 10, dadurch gekennzeichnet, daß die Gehäuse (24) so ausgestaltet sind, daß sie zusammen in der Schließstellung der Klammer im wesentlichen einen keilförmigen Eindringkopf (6) bilden, der eine vertikale Symmetrieebene (x-x') aufweist.

16. Vorrichtung nach Anspruch 9, dadurch gekennzeichnet, daß die Betätigungseinrichtungen (52) zum Öffnen und Schließen der Gegenspannbacken (7) durch die Arme getragen werden.

17. Vorrichtung nach Anspruch 9, dadurch gekennzeichnet, daß die Tragstruktur mit Einrichtungen (7) der Erfassung der Basis der Fettstreifen verbunden ist.

18. Vorrichtung nach Anspruch, dadurch gekennzeichnet, daß die Klammer (4) auf einem Gelenk (11) angeordnet ist, das durch eine horizontale Gelenkachse (70) auf einem darüberliegenden Chassis (12) aufgehängt ist, auf das ein Betätiger (71) drückt, der auf das Gelenk wirkt.

19. Vorrichtung nach Anspruch 9, 10 oder 18, dadurch gekennzeichnet, daß die Klammer für jeden Klemmbacken (5) einen Beabstander (74) aufweist, der durch einen kleinen Bogen (75) gebildet ist, der sich parallel zur Symmetrieebene des Kopfes (6) und unter dem entsprechenden Klemmbacken erstreckt, wobei er durch ein Drehlager (76) getragen wird, wobei der kleine Bogen (75) mit einem Motororgan (79) des alternierenden teilweisen, Winkeldrehantriebs gekoppelt ist.

Fig. 1

Fig. 2  Fig. 3  Fig. 4

Fig. 5  Fig. 6  Fig. 7

Fig. 8  Fig. 9

Fig.10

Fig. 11

EP 0 245 183 B1

Fig. 13

Fig. 15

Fig. 12

Fig.16

Fig.14

24

47

7

36

25

28

p1-p2

3

35

48

f7

f7

32 28 31

24

5

48 29 47

30

10

EP 0 245 183 B1

Fig.17

Fig.18

Fig.19

Fig. 20

Fig. 21

Fig. 22